# EUROPEAN PATENT SPECIFICATION

(11) **EP 2 240 754 B1**
(45) Date of publication and mention of the grant of the patent: **21.09.2011**
(21) Application number: 09708186.3
(22) Date of filing: 04.02.2009
(51) Int. Cl.: G01N 1/22

(54) **METHOD FOR COLLECTING GASEOUS SAMPLE**
VERFAHREN ZUM SAMMELN EINER GASFÖRMIGEN PROBE
PROCÉDÉ DE COLLECTE D'UN ÉCHANTILLON GAZEUX

(30) Priority: 05.02.2008 JP 2008024667
(43) Date of publication of application: 20.10.2010
(73) Proprietor: Panasonic Corporation, Kadoma-shi Osaka 571-8501 (JP)
(72) Inventor: OKI, Akio, Osaka-shi, Osaka 540-6207 (JP); OKA, Hiroaki, Osaka-shi, Osaka 540-6207 (JP)
(74) Representative: Grünecker, Kinkeldey, Stockmair & Schwanhäusser Anwaltssozietät
(86) International application number: PCT/JP2009/052255
(87) International publication number: WO 2009/099243

(56) References cited:
- JP-A- 2006 068 711
- US-A- 4 885 076
- US-A- 5 098 657

## Description

### [Technical Field]

The present invention relates to a method for effectively collecting gaseous sample onto an electrode through electrostatic atomization.

### [Background Art]

Electrostatic atomization is well known in the art and has usually been used to accumulate onto base plates a trace amount of the various chemical substances like DNA, antibody and protein.

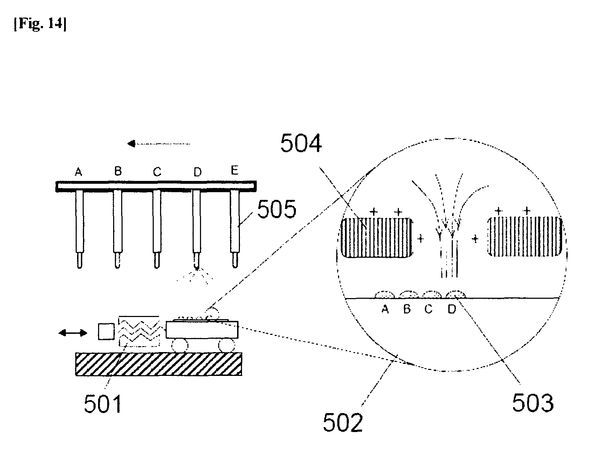

For example, the conventional electrostatic atomizer disclosed in Patent Publication 1 is an apparatus to spot or laminate onto base plates non-volatile diluted biomolecule solution. Figure 14 illustrates the conventional electrostatic atomizer. By applying several kV of high-voltage between the capillary tube 505 filled with protein solution and the dielectric layer 504, mist of the protein solution is sprayed onto the base plate 502 from tip of the capillary tube 505.

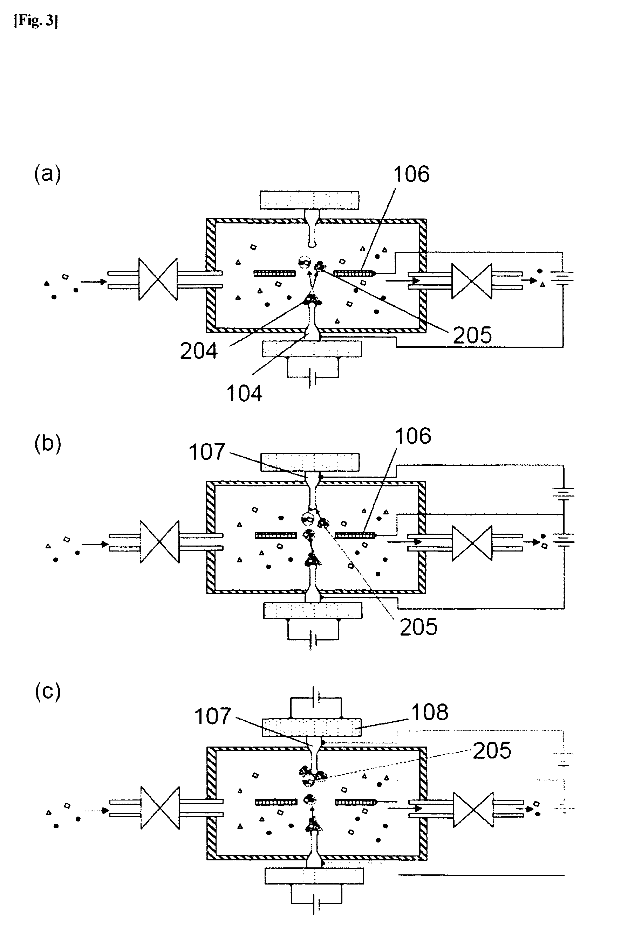

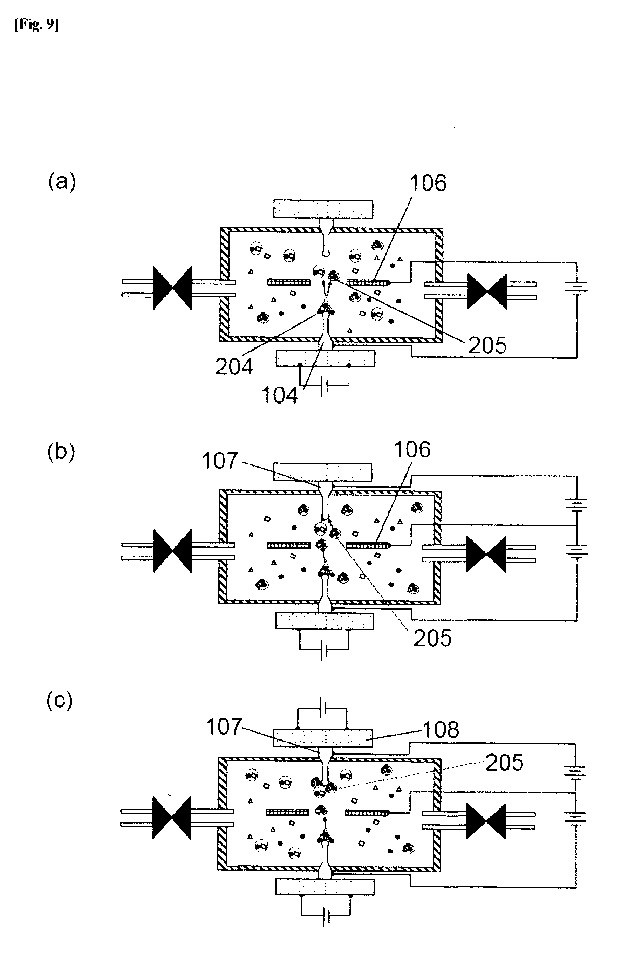

Electrostatic atomizer illustrated in Figure 14 accumulated any chemical solution at the desired positions by controlling electrical conductivity in the dielectric layer 504 formed on the base plate 502 or generating topical electric field with the hole at the dielectric layer 504. This method was certainly effective in the manufacture of those so called DNA chip or protein chip wherein DNA or protein is sequentially spotted or laminated onto base plates.
[Patent Citation 1] Japanese Patent Provisional Publication No. 2002-511792 (Page 78, Figure 9, and optionally Page 31, Lines 12-13, Figures 3, 4 and 19)
[Patent Citation 2] Japanese Patent Publication No. 3952052
[Patent Citation 3] Japanese Patent Provisional Publication No. 7-190990 (in particular Figure 3)
[Patent Citation 4] Japanese Patent Provisional Publication No. 7-270285 (in particular Paragraphs of 0001 and 0008)

### [Disclosure of Invention]

### [Technical Problem]

But when a capture electrode is made of flat plate as taught by the prior arts, electrostatically atomized solution came to be spread over the whole surface of such electrode.

### [Technical Solution]

In order to eliminate such problems known in the art, the present inventions directed to a method for collecting gaseous sample with an electrostatic atomizer, wherein the electrostatic atomizer comprises a sealable container, an inlet for gaseous sample mounted at a part of the container, an outlet for gaseous sample mounted at the other part of the container, an atomizing electrode mounted in the container, a primary refrigerator mounted at adjacent to the atomizing electrode, an opposite electrode mounted in the container, an acicular capture electrode opposed to the opposite electrode, and a secondary refrigerator mounted adjacent to the capture electrode, and the method comprises the steps of introducing the gaseous sample into the container through the inlet, chilling the atomizing electrode with the primary refrigerator, preparing a primary condensate from the gaseous sample on an outer peripheral surface of the atomizing electrode, preparing charged microparticles from the primary condensate with electrostatic atomization, applying voltage to the capture electrode for the opposite electrode, chilling the capture electrode with the secondary refrigerator, and preparing a secondary condensate from the charged microparticles at adjacent to the tip of the capture electrode.

It is preferable to complete the introduction of the gaseous on or before initiation of preparing charged microparticles.

Then, it is preferable to direct the tip of the capture electrode toward downwardly.

Further, it is preferable to chill the capture electrode with the secondary refrigerator to condensation point water vapour or less.

Then, it is preferable to employ a thermoelectric element as the secondary refrigerator.

Further, it is preferable to change chilling surface of the secondary refrigerator to heating surface by reversing polarity of direct voltage to be applied to the thermoelectric element.

Then, it is preferable to evaporate the secondary condensate by heating said capture electrode.

Further, it is preferable that the opposite electrode is condensation point of water vapour or more.

Then, it is preferable that the charged microparticles comprise water and components of the gaseous sample.

Further, it is preferable that components of the gaseous sample are volatile organic compounds.

Further, it is preferable that molecular weight of the volatile organic compounds is from 15 or more to 500 or less.

Then, it is preferable that the capture electrode possesses a mechanism to remove electrical charge with the charged microparticles.

Further, it is preferable that the capture electrode is able to connect to ground.

Then, it is preferable that tip of the capture electrode has a reservoir to receive the secondary condensate.

Further, it is preferable that tip of the capture electrode is equipped with a detector for chemical substances.

Then, it is referable that an apparatus to assay biomolecules employs a method for collecting gaseous sample according to Claim 1.

These and other objects, additional aspects and advantages of the present invention will become apparent from the following detailed description on the preferred embodiments by referring to the drawings attached hereto.

### [Advantageous Effects]

According to the method for collecting gaseous sample of the present invention, since electrostatically atomized solution is concentrated at an area adjacent to tip of the acicular capture electrode, such electrostatically atomized solution would not spread over the capture electrode. Then, since the capture electrode is chilled by previously applying voltage to the same, such electrostatically atomized solution would also not spread over the capture electrode.

### [Brief Description of Drawings]

[Fig. 1] Figure 1 is the schematic view illustrating electrostatic atomizer according to Embodiment I of the present invention.
[Fig. 2] Figure 2 is the schematic view illustrating a method for collecting gaseous sample according to Embodiment 1 of the present invention.
[Fig. 3] Figure 3 is the schematic view illustrating a method for collecting gaseous sample according to Embodiment 1 of the present invention.
[Fig. 4] Figure 4 is the schematic view illustrating a method for collecting gaseous sample according to Embodiment 1 of the present invention.
[Fig. 5] Figure 5 is the schematic view illustrating a method for collecting gaseous sample according to Embodiment 2 of the present invention.
[Fig. 6] Figure 6 is the schematic view illustrating a method for collecting gaseous sample according to Embodiment 2 of the present invention.
[Fig. 7] Figure 7 is the schematic view illustrating a method for collecting gaseous sample according to Embodiment 2 of the present invention.
[Fig. 8] Figure 8 is the schematic view illustrating a method for collecting gaseous sample according to Embodiment 3 of the present invention.
[Fig. 9] Figure 9 is the schematic view illustrating a method for collecting gaseous sample according to Embodiment 3 of the present invention.
[Fig. 10] Figure 10 is the schematic view illustrating a method for collecting gaseous sample according to Embodiment 3 of the present invention.
[Fig. 11] Figure 11 is the schematic view illustrating a tail cone and a method for producing charged microparticles.
[Fig. 12] Figure 12 is the schematic view illustrating the capture electrode 107 at the step of preparing secondary condensate and a photograph thereon taken by light microscope.
[Fig. 13] Figure 13 is the graph illustrating an assay results on the secondary condensate.
[Fig. 14] Figure 14 is the schematic view illustrating the conventional electrostatic atomizer.

### [Explanation of Reference]

- 100: electrostatic atomizer
- 101: container
- 102: inlet
- 103: outlet
- 104: atomizing electrode
- 105: primary refrigerator
- 106: opposite electrode
- 106a: sl it
- 107: capture electrode
- 108: secondary refrigerator
- 109a, 109b: valve
- 201: water
- 202a, 202b: chemical substance
- 203: gaseous sample
- 204: primary condensate
- 205: charged microparticle
- 206: secondary condensate
- 301: Taylor cone
- 302: primary condensate
- 303: charged microparticles
- 401: secondary condensate
- SOl: X-Y stage
- 502: base plate
- 503: spotted protein
- 504: dielectric layer
- 505: capillary tube

### [Best Mode for Carrying Out the Inventions]

Embodiments of the present invention are described as follows with reference to the drawings attached hereto.

### (Embodiment 1)

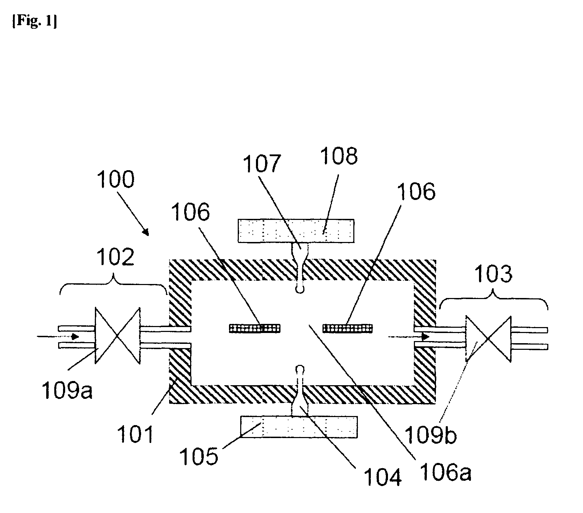

Figure 1 is the schematic view illustrating electrostatic atomizer according to Embodiment 1 of the present invention.

According to this embodiment, the electrostatic atomizer 100 is assembled from the following elements.

Container 101 is isolated from the outside thereof with a partition, then any material would not communicate therebetween. Shape of the container 101 may preferably be rectangular parallelepiped form, otherwise the other shape like polyhedron, spindle form, spherical form or channel form may also be used. Then, with regard to size of the container 101, volume of the container 101 should preferably be enough less than total amount of the gaseous sample to be introduced. For example, when 300cc of the gaseous sample as total amount thereof is introduced, volume of the container should preferably be 6cc or less. Further, materials for the container 101 are preferable those which have less adsorbed gas or incorporated gas. As those, metal like stainless or aluminum is the most preferable, but inorganic materials like glass or silicon or plastics like acryl, polyethylene terephthalate or Teflon (Registered Trademark) may also be used. Then the container can also be made by employing some of these materials. In the meantime, the container 101 is preferable hard structure, but it may be soft or flexible like airbag, balloon, flexible tube or syringe.

Inlet 102 is mounted at a part of the container 101. Inlet 102 is used to introduce the gaseous sample into the container 101. As a position for the inlet 102 to be mounted, any position can be used as far as it allows rapidly introducing the gaseous sample into the container 101. For example, when the shape of the container 101 is rectangular parallelepiped form, the inlet should preferably be mounted at the center of surface in the container 101 rather than the corner thereof. Shape, size and material on the inlet 102 are not limited in the present invention. As a shape of the inlet 102, the linear form like that indicated in Figure 1 or the other linear form comprising a branched space may be used. Further, one or more inlet 102 may be mounted.

Outlet 103 is mounted at the other part of the container 101. Outlet 103 is used to exhaust the excessive gaseous sample of those which saturate the container 101. As a position for the outlet 103 to be mounted, any position can be used as far as it allows exhausting the excessive gaseous sample of those which saturate the container 101. Shape, size and material on the outlet 103 are not limited in the present invention. As a shape of the outlet 103, the linear form like that indicated in Figure 1 or the other linear form comprising a branched space may be used. Further, one or more outlet 103 may be mounted.

Atomizing electrode 104 is mounted in the container 101. Atomizing electrode 104 is preferably mounted at a position where it is in the container 101 and can be contacted with the gaseous sample. For example, it is preferably mounted at the center of the bottom in the container 101. Lesser contact area between the atomizing electrode 104 and the container 101 is preferable in view of reducing thermal conductivity.

Shape of the atomizing electrode 104 is preferably acicular form. Length of the acicular electrode is preferably from 3 mm or more to 10 mm or less. Then diameter of the acicular electrode is preferably from 0.5 mm or more to 1.0 mm or less. Such diameter may be even from tip of the electrode to root thereof, otherwise it may be uneven by reducing diameter of the tip portion and keeping that of the root portion. One or more acicular electrodes may be mounted.

Further, as materials for the atomizing electrode 104, good thermal conductive materials are preferable, in particular, metal is the most preferable. Especially, uncompounded metal like stainless, copper, brass, aluminum, nickel or tungsten may be used otherwise, an alloy or an intermetallic compound made from two or more the foregoing uncompounded metals may also be used. Further, in order to protect surface of such atomizing electrode 104, they may be coated with a film of chemically stable metal like gold or platinum or with the other good thermal conductive materials.

Primary refrigerator 105 is mounted at adjacent to the atomizing electrode 104. Primary refrigerator 105 chill the atomizing electrode 104. In the meantime, most preferably the primary refrigerator 105 is a thermoelectric element, but any heat pipe employing refrigerant carrier like water, air heat exchange element and cooling fan may also be used. Larger surface area to be chilled in the primary refrigerator 105 can effectively chill the atomizing electrode 104. Accordingly, size of the primary refrigerator 105 may be adjusted to realize the maximum contact area between that and the atomizing electrode 104, outer peripheral surface to be chilled in the primary refrigerator 105 may have rough structure, otherwise, the outer peripheral surface to be chilled in the primary refrigerator 105 may have porous structure. One or more the primary refrigerator 105 may be used.

In the meantime, the primary refrigerator 105 preferably contacts with the atomizing electrode 104 directly, but it may also contacts therewith through thermal conductive medium like thermal conductive sheet, thermal conductive resin, metal plate or grease. Then, the primary refrigerator 105 preferably contacts with the atomizing electrode 104 usually, but it may be separated occasionally therefrom with physical or thermal means.

Opposite electrode 106 is opposite to the atomizing electrode 104. Opposite electrode 106 is used for electrostatic atomization in combination with the atomizing electrode 104. Distance between the opposite electrode 106 and the tip of the atomizing electrode 104 is preferably from 3 mm or more to 4 mm or less. Toric shape is the most preferably as that of the opposite electrode 106. Figure 1 illustrates the sectional view of the toric opposite electrode 106. It is most preferable to put the center of the toric opposite electrode 106 onto the production of the acicular atomizing electrode 104. In the meantime, shape of the opposite electrode 106 may be any polygon like rectangle or trapezoid, and they may be formed therein the slit 106a like through holes wherein the charged microparticles are passed through. Then, thickness of the opposite electrode 106 is not limited in the present invention. Further, sectional area, shape and amount of the through holes are not limited in the present invention.

Metal is preferable as materials for the opposite electrode 106. Especially, uncompounded metal like iron, copper, zinc, chromium, aluminum, nickel or tungsten may be used, in addition, an alloy like stainless or brass, or an intermetallic compound comprising two or more of the foregoing uncompounded metals may also be used. Further, in order to protect surface of such opposite electrode 106, they may be coated with a film of chemically stable metal like gold or platinum or with the other good thermal conductive materials.

Capture electrode 107 is mounted at adjacent to the opposite electrode 106. Then the opposite electrode 106 is preferably mounted between the capture electrode 107 md the atomizing electrode 104. Further through holes in the capture electrode 107 and the opposite electrode 106 are preferably aligned substantially linear with the atomizing electrode 104. Opposite electrode 107 is preferably mounted at the ceiling of the container 101, then the atomizing electrode 104 is preferably mounted at the bottom of the container 101, and the opposite electrode 106 is preferably mounted between the capture electrode 107 and the atomizing electrode 104. Capture electrode 107 is used to collect electrostatically atomized charged microparticles with static electricity.

Shape of the capture electrode 107 is preferably acicular form. Length of the acicular electrode is preferably from 3 mm or more to 10 mm or less. Then diameter of the acicular electrode is preferably from 0.5 mm or more to 1.0 mm or less. Such diameter may be even from tip of the electrode to root thereof, otherwise it may be uneven by reducing diameter of the tip portion and keeping that of the root portion. In the meantime, distance between the tip of the capture electrode 107 and the opposite electrode 106 is not limited in the present invention. Further, as materials for the capture electrode 107, good thermal conductive materials are preferable, in particular, metal is the most preferable. Especially, uncompounded metal like iron, copper, zinc, chromium, aluminum, nickel or tungsten may be used, in addition, an alloy like stainless or brass, or an intermetallic compound comprising two or more of the foregoing uncompounded metals may also be used. Further, in order to protect Surface of such capture electrode 107, they may be coated with a film of chemically stable metal like gold or platinum or with the other good thermal conductive materials.

In the meantime, since electrical field is preferably concentrated at the tip of the capture electrode 107, shape thereof may be formed in a conical shape, square pyramid or trigonal pyramid, otherwise in the other sharp shape. Then, most preferably the acicular capture electrode 107 is solid, but it may be hollow like a pipe. One or more the capture electrode 107 may be used.

Further, the tip of the capture electrode 107 is preferably mounted to direct toward downwardly. Thereby, it is preferably that electrostatically atomized solution tends to move toward the tip due to gravity.

Secondary refrigerator 108 is mounted at adjacent to the capture electrode 107. Secondary refrigerator 108 is used to chill the capture electrode 107. In the meantime, most preferably the secondary refrigerator 108 is a thermoelectric element, but any heat pipe employing refrigerant carrier like water, air heat exchange element and cooling fan may also be used. Larger surface area to be chilled in the secondary refrigerator 108 can effectively chill the capture electrode 107. Accordingly, size of the secondary refrigerator 108 may be adjusted to realize the maximum contact area between that and the capture electrode 107, outer peripheral surface to be chilled in the secondary refrigerator 108 may have rough structure, otherwise, the outer peripheral surface to be chilled in the secondary refrigerator 108 may have porous structure. One or more the secondary refrigerator 108 may be used.

In the meantime, the secondary refrigerator 108 preferably contacts with the capture electrode 107 directly, but it may also contacts therewith through thermal conductive medium like thermal conductive sheet, thermal conductive resin, metal plate or grease. Then, the secondary refrigerator 108 preferably contacts with the capture electrode 107 usually, but it may be separated occasionally therefrom with physical or thermal means.

Then, although most preferably the secondary refrigerator 108 and the primary refrigerator 105 are controlled individually, a single refrigerator may be used as both the primary refrigerator 105 and the secondary refrigerator 108. Size, kind and amount of the primary refrigerator 105 may be identical to or be different from those of the secondary 108 refrigerator.

Valves 109a and 109b are preferably mounted at the inlet 102 and the outlet 103. Container 101 can preferably be sealed with such valves 109a and 109b. Materials, position and kinds on the valves 109a and 109b are not limited in the present invention. Further, when conductance on the valves 109a and 109b are little, the container 101 is regarded as it is sealed essentially.

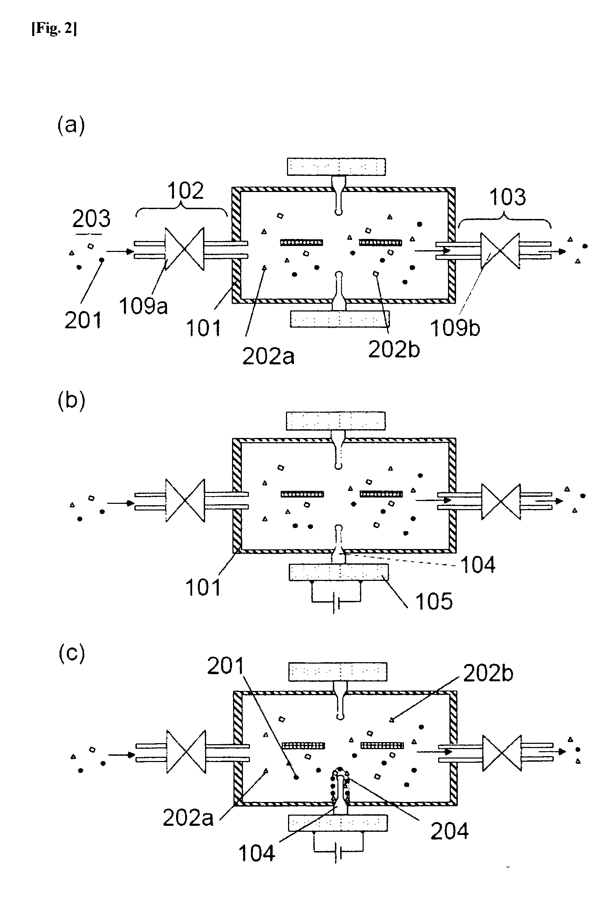

Figures 2-4 are the schematic view illustrating a method for collecting gaseous sample according to Embodiment 1 of the present invention. Same symbol was allocated to the elements in Figures 2-4 according to the corresponding identical elements in Figure 1 and any description on such elements has been omitted.

First of all, the gaseous sample 203 consisting of water 201 and chemical substance 202a, 202b is introduced into the container 101 through the inlet 102. Figure 2 (a) illustrates introducing of the gaseous sample. Gaseous sample detector may be mounted in the container 101 to confirm as to whether or not that the container 101 is filled with the gaseous sample 203. One or more gaseous sample detector can be mounted. According to the present invention, any kind and position of the gaseous sample detector can be employed.

During introducing of the gaseous sample, the gaseous sample 203 is preferably put into the container 101 from the inlet 102, though they may be put thereinto by depressurizing the outlet 103.

Further, during introducing of the gaseous sample, prior to introducing of the gaseous sample 203 into the container 101, the container 101 is preferably filled with fresh air. Container 101 may be filled with dry nitrogen gas or the other inactive gas, otherwise it may be filled with standard gas or calibration gas wherein their humidity is equivalent to that of the gaseous sample.

Then, during introducing of the gaseous sample, excessive gaseous sample 203 is exhausted through outlet 103.

Introduction and exhaustion of the gaseous sample 203 during introducing of the gaseous sample are controlled by the valve 109a and the valve 109b. Trap may be mounted at the inlet 102 not to introduce unnecessary products.

For convenience sake, Figure 2 (a) does not include any substance except for chemical substances 202a, 202b, but the gaseous sample 203 may includes two or more components.

Then, during producing of the primary condensate, the atomizing electrode 104 is chilled by the primary refrigerator 105. Figure 2 (b) illustrates producing of the primary condensate. According to Figure 2 (b), the primary refrigerator 105 is connected to direct power to illustrate an image of chilling the atomizing electrode 104 by the primary refrigerator 105. But the present invention is not limited to such direct power on the primary refrigerator 105 during producing of the primary condensate.

By producing the primary condensate after such introduction of the gaseous sample, any condensation on all the substances except for such gaseous sample can be controlled. During producing of the primary condensate, it is preferable to decrease thermal conductivity not to chill any part except for the atomizing electrode 104, for example, the container 101. In order to decrease the thermal conductivity, it is most preferable to reduce contact area between the atomizing electrode 104 and the container 101. Otherwise, any material having less coefficient of thermal conductivity may be sandwiched at the contact space between the atomizing electrode 104 and the container 101.

Then, during producing of the primary condensate, the primary condensate 204 comprising water 201, the chemical substance 202a and the chemical substance 202b are formed on the outer peripheral surface of the chilled atomizing electrode 104. Figure 2(c) illustrates producing of the primary condensate.

During producing of the primary condensate, it is preferable to appropriately control temperature of the atomizing electrode 104 with the primary refrigerator 105 not to excess an amount of the primary condensate 204.

Then, during producing of the charged microparticles, numerous charged microparticles 205 are formed from the primary condensate 204. Figure 3 (a) illustrates producing of the charged microparticles. Such charged microparticles are most preferably microparticles consisting of several thousand of molecules, but they may be single through several hundred of clusters or be several ten thousand of liquid droplets. Two or more of those may be used simultaneously.

Charged microparticles 205 may also include ion or radical from chemical substances in addition to electrically neutral molecules. They may be used simultaneously. Charged microparticles 205 are preferably charged negatively, but they may be charged positively.

Most preferable method to produce the charged microparticles is an electrostatic atomization. Principle of the electrostatic atomization is briefly noted herein. Primary condensate 204 is transferred to the tip of the atomizing electrode 104 by the voltage applied to between the atomizing electrode 104 and the opposite electrode 106. Liquid level of the primary condensate 204 is conically raised toward the opposite electrode 106 by coulomb attraction. Such conically raised liquid is called as Taylorl cone. When the condensate is further grow up at the outer peripheral surface of the atomizing electrode 104, the conical primary condensate 204 is also grown up and electrical charges are concentrated at the tip of the primary condensate 204, thereby, such coulomb attraction is enhanced. When such coulomb attraction is in excess of surface tension of water, the primary condensates 204 are broken and dispersed, then the charged microparticles 205 are formed. This is the principle of the electrostatic atomization.

During producing of the charged microparticles, voltage of from 4kV or more to 6kV or less is preferably applied to between the atomizing electrode 104 and the opposite electrode 106.

Diameter of the charged microparticles 205 is not particularly limited according to the present invention, but it is restricted preferably to the range of from 2 nm or more to 30 nm or less in view of stability of the charged microparticles.

An electrical amount to be charged to the charged microparticles 205 is most preferably an amount equivalent to the electrical charge content (1.6 X 10⁻¹⁹ C) per the single microparticle, but such amount can be changed to that larger than the electrical charge content.

Then, during applying of voltage, voltage is applied to the capture electrode 107 for the opposite electrode 106. Figure 3 (b) illustrates applying of the voltage. Charged microparticles 205 having the diameter of from about 2 mn to about 30 mn are essentially tend to be dispersed because they are repulsive to static electricity, but most of the charged microparticles 205 are easily concentrated at adjacent to the tip of the capture electrode 107 by providing the acicular capture electrode 107 and concentrating static electricity thereat. When the charged microparticles 205 are negatively charged, it is preferably to apply direct positive voltage to the capture electrode 107 for the opposite electrode 106. Application of the voltage is preferably continuously, but it may be applied pulsatively.

Then, during producing of the secondary condensate, the capture electrode 107 is chilled by the secondary refrigerator 108. Figure 3 (c) illustrates producing of the secondary condensate. By producing the secondary condensate after such application of voltage, charged microparticles 205 are concentrated at adjacent to the tip of the capture electrode 107 and can be chilled.

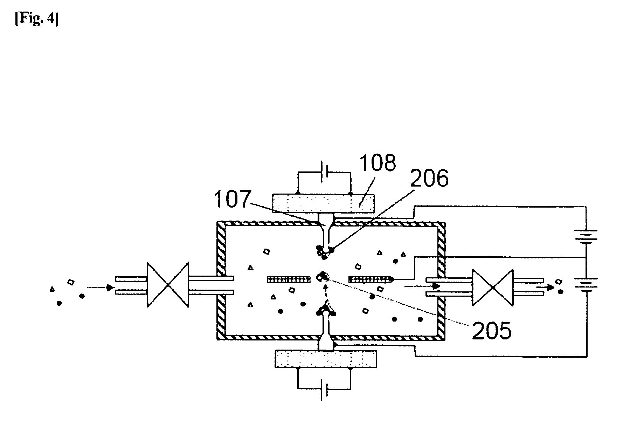

then, during producing of the secondary condensate, most of the charged microparticles 205 are condensed at adjacent to the tip of the capture electrode 107, then the secondary condensates 206 are formed. Figure 4 illustrates producing of the secondary condensate. As a result of producing of the secondary condensate, it prevents the capture electrode 107 from spreading the secondary condensate 206 on the whole surface thereof.

According to the embodiment of the present invention, it is preferable to chill the capture electrode 107 with the secondary refrigerator 108 to the condensation point of water vapour or less. Temperature of the capture electrode 107 may be measured with a thermometer mounted at adjacent to the capture electrode 107. Temperature of the capture electrode 107 may also be controlled.

Then, according to the embodiment of the present invention, it is preferable to heat the capture electrode 107 to evaporate the secondary condensate 206. Temperature of the heated capture electrode 107 is preferably the condensation point of water vapour or more. Thereby, the gaseous sample would not be condensed on the capture electrode 107 at unwanted occasion.

Further, according to the embodiment of the present invention, it is preferable to change the surface to be chilled in the secondary refrigerator 108 into the heating surface by reversing polarity of voltage to be applied to the thermoelectric element. Thereby, since the capture electrode 107 can be heated, the secondary condensate 206 would easily be evapolated.

Then, according to the embodiment of the present invention, it is preferable to keep the temperature of the opposite electrode 106 at the condensation point of water vapour or more. By keeping the temperature of the opposite electrode 106 at the condensation point of water vapour or more, the charged microparticles 205 would not be condensed on the outer peripheral surface of the opposite electrode 106. In order to keep the temperature of the opposite electrode 106 at the condensation point of water vapour or more, any heating unit may be mounted at the opposite electrode 106.

Charged microparticles 205 preferably comprises water 201 together with the chemical substances 202a, 202b which are components of the gaseous sample. Weight ratio of water and gaseous sample components in the charged microparticles may be identical to that of water and gaseous sample components in the gaseous sample or may be different therefrom.

Then, according to the embodiment of the present invention, component of the gaseous sample is preferably volatile organic compounds (particularly, volatile organic compounds having molecular weight of from 15 or more to 500 or less). Such volatile organic compounds may preferably include ketone, amine, alcohol, aromatic hydrocarbon, aldehyde, ester, organic acid, hydrogen sulfide, methyl mercaptan and disulfide. Otherwise, these subtances or alkane, alkene, alkyne, diene, cycloaliphatic hydrocarbon, allene, ether, carbonyl, carbanion, protein, polynuclear aromatic, heterocyclic, organic derivative, biomolecule, metabolite, isoprene, isoprenoid and derivative thereof may also be used.

Further, according to the embodiment of the present invention, the capture electrode 107 is preferably destaticized. For example, when the charged microparticles 205 are charged negatively, the capture electrode 107 will also be charged negatively according to gaseous sample components collected at capture electrode 107. Since it will be difficult to collect the charged microparticles 205 at adjacent to the tip of the capture electrode 107 when the charged amounts thereof is excessive, any destaticization system should preferably be provided. Such destaticization may conduct continuously or optionally.

Then, according to the embodiment of the present invention, the capture electrode 107 is preferable able to connect to ground. Any connection method can be employed in the present invention.

Further, according to the embodiment of the present invention, it is preferable to provide a reservoir to store the secondary condensate 206 at the tip of the capture electrode 107. By providing the reservoir at the tip of the capture electrode 107, the secondary condensate 206 would not spread over the whole surface of the capture electrode 107. The reservoir may have rough structure at the tip of the capture electrode 107. By providing such rough structure, contact area between the structure and the secondary condensate 206 would be increased, thereby the liquid is stored therein. Then, shape of the reservoir may include a globular form, a spindle form, and the other polygonal forms. When the reservoir is in the shape of a globular form, diameter thereof is preferably of from 1 mm or more to 2 mm or less. Then the reservoir may comprise any water absorbent like porous material, nanofoam and gel. Otherwise, outer peripheral surface of the tip of the capture electrode 107 may be subjected to hydrophilic treatment. As such hydrophilic treatment, hydrophilic materials like glass and titanium oxide may be formed into a film, otherwise, any organic molecule having hydrophilic group like silanol group, carboxyl group, amino group and phosphoric group at the terminal thereof may be absorbed or be bound.

Further, according to the embodiment of the present invention, it is preferable to provide a chemical substance detector at the tip of the capture electrode 107. As such chemical substance detector, in addition to gas chromatograph, the other chemical substance detector may also be used. For example, a sensor like MOSFET (Metal-Oxide-Semiconductor Electric Field Transistor), ISFET (Ion Sensitive Electric Field Transistor), Bipolar Transistor, Organic Thin Layer Transistor, OPTODE, Metal Oxide Semiconductor Sensor, Quartz Crystal Microbalance (QCM), Surface Acoustic Wave (SAW) Element, Solid Electrolyte Gas Sensor, Electrochemical Cell Sensor, Surface Wave Plasmon Resonance (SPR), Langmuir-Blodgett Film (LB Film) Sensor may be used. Otherwise, High Performance Liquid Chromatograph, Mass Spectrometer, Nuclear Magnetic Resonance Spectrometer, LC-IT-TOFMS, SHIFT-MS may also be used. Then one or more chemical substance detectors may be mounted. Further, when two or more chemical substance detectors are used, single type of the detectors may be used, while multiple types thereof may also be used in combination therewith. Any means to transfer the secondary condensate 206 may be provided between the capture electrode 107 and the chemical substance detector.

Then, according to the embodiment of the present invention, an assay apparatus for biomolecule may employ the present method for collecting the gaseous sample. Such biomolecule may preferably include ketone, amine, alcohol, aromatic hydrocarbon, aldehyde, ester, organic acid, hydrogen sulfide, methyl mercaptan and disulfide. Otherwise, these subtances or alkane, alkene, alkyne, diene, cycloaliphatic hydrocarbon, allene, ether, carbonyl, carbanion, protein, polynuclear aromatic, heterocyclic, organic derivative, biomolecule, metabolite, isoprene, isoprenoid and derivative thereof may also be used. Then the other biological organic compounds may be used.

According to the embodiment of the present invention, the charged microparticles 205 are concentrated at adjacent to the tip of the acicular capture electrode 107 during applying of voltage to prevent condensate from spreading at an electrode to capture it and are chilled secondary, thereby, the secondary condensate 206 are duly produced along with the production method thereof. Concentration of the secondary condensate 206 to be realized by secondary chilling the charged microparticles after application of voltage is larger than that to be realized by secondary chilling the charged microparticles prior to application of voltage.

In the meantime, according to the embodiment of the present invention, it is quite different from the conventional generator for negatively charged mist relied on electrostatic atomization. Namely, diameter of charged microparticles produced by such conventional mist generator is very little and is of from several nm to several ten nm. Charged microparticles in nanometer size tend therefore to (1) float in air for the longer prior of about 10 minutes and (2) easily spread. Such properties in the negatively charged mist are great advantageous in a humectant apparatus or deodorant apparatus for skin and hair. But such properties are disadvantageous in collecting the chemical substances according to the present invention. Accordingly, there is usually no idea to use an electrostatic atomization method which produces the charged microparticles in nanometer size to collect the chemical substances. Nevertheless, according to the method of this embodiment, such chemical substance can effectively be captured, even if the charged microparticles in nanometer size tend to float or spread.

Further, according to the embodiment of the present invention, when the container 101 is made of plastics, Teflon (Registered Trademark) is the most preferable, while acrylic resin, polyethylene terephthalate (PET), polyester, fluorine plastics or PDMS may also be used. Then when the container 101 is made of plastics, it is more preferable to coat metallic film onto the inner surface of the container 101. As such metallic film, aluminum film is the most preferable in view of their lower cost and their ideal gas barrier properties, but the other metallic film may also be used. Otherwise two or more of these may be used simultaneously.

Then, according to the embodiment of the present invention, when the container 101 is made of inorganic materials, any inorganic matter like silica glass, borosilicate glass, silicon nitride, alumina and silicon carbide may be used, and those wherein thin film made of insulating material is coated on silicon surface with silicon dioxide, silicon nitride or tantalum oxide may also be used. Otherwise two or more of these may be used simultaneously.

Further, the valve 109a and the valve 109b mounted at the inlet 102 and the outlet 103 may be equipped with a control valve like check valve or stop valve to control flow of the gaseous sample.

Then, an instrument to determine flow rate of the gaseous sample may be mounted at the inlet 102 and the outlet 103. As the instrument, integrating flowmeter or mass flowmeter may be used, otherwise, the other flow instrument may also be used.

Further, during introducing of the gaseous sample, when pressure is applied to the inlet 102, an electric power pump like diaphragm pump, peristaltic pump or syringe pump may be used, otherwise, the gaseous sample may be introduced manually with syringe or dropper.

Then, during introducing of the gaseous sample, pressure is drawn from the outlet 103, an electric power pump like diaphragm pump, peristaltic pump or syringe pump may be used, otherwise, the gaseous sample may be introduced manually with syringe or dropper.

Further, heat dissipation fin may be mounted at heat dissipation area in the primary refrigerator 105 and the secondary refrigerator 108. Otherwise, such heat dissipation area may be chilled with water, air, thermoelectric element or the other method. Two or more of these may be used simultaneously.

Although the atomizing electrode 104 preferably employs metal, any material which has good electrical conductivity or good thermal conductivity may also be employed.

Further, according to the embodiment of the present invention, one or more atomizing electrode 104 may be used. When the plural atomizing electrodes 104 are used, they may be arranged one dimensionally like linearly, two dimensionally like circularly, parabolic, ovally, tetragonal lattice forum, rhombic lattice form, closest packing lattice form, radially, randomly, or three dimensionally like spherically, parabolic curved form or ovally curved form.

Although the capture electrode 107 preferably employs metal, any material which has good electrical conductivity or good thermal conductivity may also be employed.

Further, according to the embodiment of the present invention, one or more capture electrode 107 may be used. When the plural capture electrode 107 are used, they may be arranged one dimensionally like linearly, two dimensionally like circularly, parabolic, ovally, tetragonal lattice form, rhombic lattice form, closest packing lattice form, radially, randomly, or three dimensionally like spherically, parabolic curved form or ovally curved form.

### (Embodiment 2)

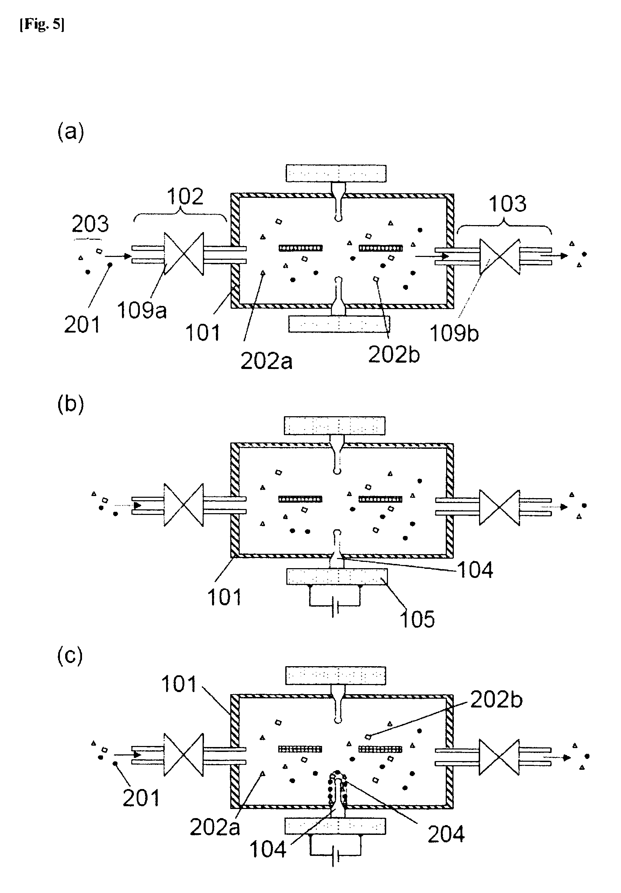

Figures 5-7 are the schematic view illustrating a method for collecting gaseous sample according to Embodiment 2 of the present invention. Same symbol was allocated to the elements in Figures 5-7 according to the corresponding identical elements in Figures 1-4 and any description on such elements has been omitted.

First of all, the gaseous sample 203 consisting of water 201 and chemical substance 202a, 202b is introduced into the container 101 through the inlet 102. Figure 5 (a) illustrates introducing of the gaseous sample. Gaseous sample detector may be mounted in the container 101 to confirm as to whether or not that the container 101 is filled with the gaseous sample 203. One or more gaseous sample detector can be mounted. According to the present invention, any kind and position of the gaseous sample detector can be employed.

During introducing of the gaseous sample, the gaseous sample 203 is preferably put into the container 101 from the inlet 102, though they may be put thereinto by depressurizing the outlet 103.

Further, during introducing of the gaseous sample, prior to introducing of the gaseous sample 203 into the container 101, the container 101 is preferably filled with fresh air. Container 101 may be filled with dry nitrogen gas or the other inactive gas, otherwise it may be filled with standard gas or calibration gas wherein their humidity is equivalent to that of the gaseous sample.

Then, during introducing of the gaseous sample, excessive gaseous sample 203 is exhausted through outlet 103.

Introduction and exhaustion of the gaseous sample 203 during introducing of the gaseous sample are controlled by the valve 109a and the valve 109b. Trap may be mounted at the inlet 102 not to introduce unnecessary products.

For convenience sake, Figure 5 (a) does not include any substance except for chemical substances 202a, 202b, but the gaseous sample 203 may includes two or more components.

Then, during producing of the primary condensate, the atomizing electrode 104 is chilled by the primary refrigerator 105. Figure 5 (b) illustrates producing of the primary condensate. By producing the primary condensate after such introduction of the gaseous sample, any condensation on all the substances except for such gaseous sample can be controlled. During producing of the primary condensate, it is preferable to decrease thermal conductivity not to chill any part except for the atomizing electrode 104, for example, the container 101. In order to decrease the thermal conductivity, it is most preferable to reduce contact area between the atomizing electrode 104 and the container 101. Otherwise, any material having less coefficient of thermal conductivity may be sandwiched at the contact space between the atomizing electrode 104 and the container 101.

Then, during producing of the primary condensate, the primary condensate 204 comprising water 201, the chemical substance 202a and the chemical substance 202b are formed on the outer peripheral surface of the chilled atomizing electrode 104. Figure 5 (c) illustrates producing of the primary condensate.

During producing of the primary condensate, it is preferable to appropriately control temperature of the atomizing electrode 104 with the primary refrigerator 105 not to excess an amount of the primary condensate 204.

According to the embodiment of the present invention, when the primary condensate 204 is fully produced during producing of the primary condensate, the valve 109a and the valve 109b are closed. Thereafter, any air can not communicate between the inner of the container 101 and the outside thereof.

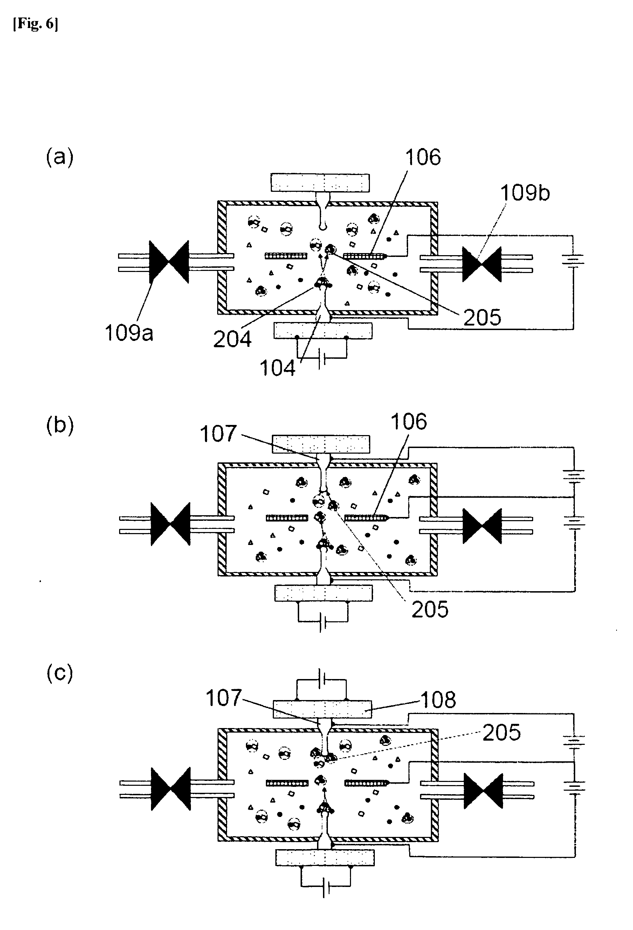

Then, during producing of the charged microparticles, numerous charged microparticles 205 are formed from the primary condensate 204. Figure 6 (a) illustrates producing of the charged microparticles. Such charged microparticles are most preferably microparticles consisting of several thousand of molecules, but they may be single through several hundred of clusters or be several ten thousand of liquid droplets. Two or more of those may be used simultaneously.

Black valves 109a and 109b in Figure 6 (a) indicated that they are closed.

Charged microparticles 205 may also include ion or radical from chemical substances in addition to electrically neutral molecules. They may be used simultaneously. Charged microparticles 205 are preferably charged negatively, but they may be charged positively.

During producing of the charged microparticles, voltage of from 4kV or more to 6kV or less is preferably applied to between the atomizing electrode 104 and the opposite electrode 106.

Diameter of the charged microparticles 205 is not particularly limited according to the present invention, but it is restricted preferably to the range of from 2 run or more to 30 nm or less in view of stability of the charged microparticles.

An electrical amount to be charged to the charged microparticles 205 is most preferably an amount equivalent to the electrical charge content (1.6 X 10⁻¹⁹ C) per the single microparticle, but such amount can be changed to that larger than the electrical charge content.

Then, during applying of voltage, voltage is applied to the capture electrode 107 for the opposite electrode 106. Figure 6 (b) illustrates applying of the voltage. Charged microparticles 205 having the diameter of from about 2 nm to about 30 nm are essentially tend to be dispersed because they are repulsive to static electricity, but most of the charged microparticles 205 are easily concentrated at adjacent to the tip of the capture electrode 107 by providing the acicular capture electrode 107 and concentrating static electricity thereat. When the charged microparticles 205 are negatively charged, it is preferably to apply direct positive voltage to the capture electrode 107 for the opposite electrode 106. Application of the voltage is preferably continuously, but it may be applied pulsatively.

Then, during producing of the secondary condensate, the capture electrode 107 is chilled by the secondary refrigerator 108. Figure 6 (c) illustrates producing of the secondary condensate. By producing the secondary condensate after such application of voltage, charged microparticles 205 are concentrated at adjacent to the tip of the capture electrode 107 and can be chilled.

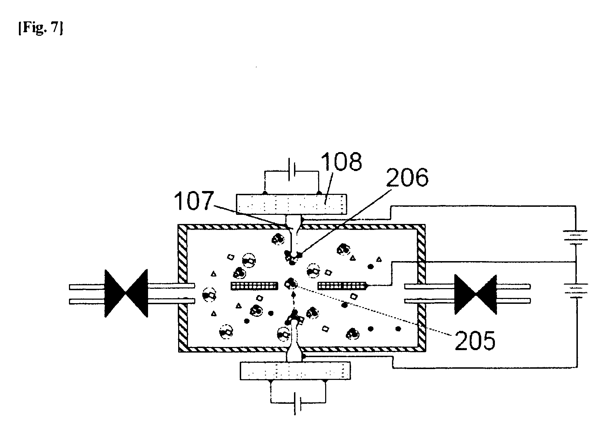

Then, during producing of the secondary condensate, most of the charged microparticles 205 are condensed at adjacent to the tip of the capture electrode 107, then the secondary condensates 206 are formed. Figure 7 illustrates producing of the secondary condensate. As a result of producing of the secondary condensate, it prevents the capture electrode 107 from spreading the secondary condensate 206 on the whole surface thereof.

In the meantime, according to the embodiment of the present invention, the container 10 is sealed after production of the charged microparticles. Accordingly, motion of the charged microparticles 205 would not be disturbed by air flow generated at introducing of the gaseous sample 203. This is because motion of the charged microparticles 205 is preferably relied mainly on static electricity. As a result thereof, the charged microparticles 205 can easily be concentrated at the tip of the capture electrode 107.

### (Embodiment 3)

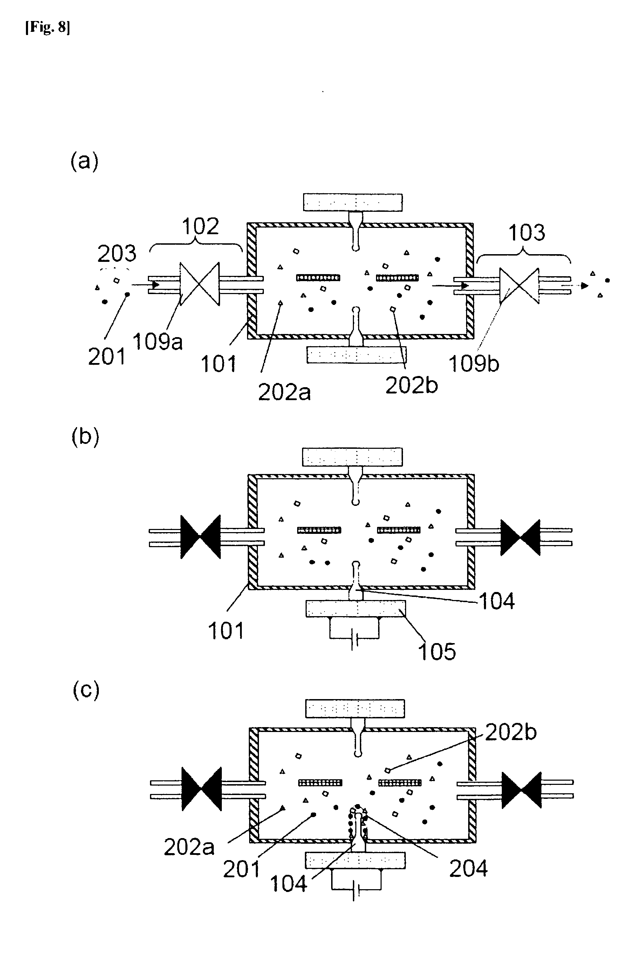

Figures 8-10 are the schematic view illustrating a method for collecting gaseous sample according to Embodiment 3 of the present invention. Same symbol was allocated to the elements in Figures 8-10 according to the corresponding identical elements in Figures 1-4 and any description on such elements has been omitted.

First of all, the gaseous sample 203 consisting of water 201 and chemical substance 202a, 202b is introduced into the container 101 through the inlet 102. Figure 8 (a) illustrates introducing of the gaseous sample. Gaseous sample detector may be mounted in the container 101 to confirm as to whether or not that the container 101 is filled with the gaseous sample 203. One or more gaseous sample detector can be mounted. According to the present invention, any kind and position of the gaseous sample detector can be employed.

During introducing of the gaseous sample, the gaseous sample 203 is preferably put into the container 101 from the inlet 102, though they may be put thereinto by depressurizing the outlet 103.

Further, during introducing of the gaseous sample, prior to introducing of the gaseous sample 203 into the container 101, the container 101 is preferably filled with fresh air. Container 101 may be filled with dry nitrogen gas or the other inactive gas, otherwise it may be filled with standard gas or calibration gas wherein their humidity is equivalent to that of the gaseous sample.

Then, during introducing of the gaseous sample, excessive gaseous sample 203 is exhausted through outlet 103.

Introduction and exhaustion of the gaseous sample 203 during introducing of the gaseous sample are controlled by the valve 109a and the valve 109b. Trap may be mounted at the inlet 102 not to introduce unnecessary products.

For convenience sake, Figure 8 (a) does not include any substance except for chemical substances 202a, 202b. but the gaseous sample 203 may includes two or more components.

According to the embodiment of the present invention, when the gaseous sample 203 is uniformily saturated during introducing thereof, the valve 109a and the valve 109b are then closed. Thereafter, any air can not communicate between the inner of the container 101 and the outside thereof.

Then, during producing of the primary condensate, the atomizing electrode 104 is chilled by the primary refrigerator 105. Figure 8 (b) illustrates producing of the primary condensate. By producing the primary condensate after such introduction of the gaseous sample, any condensation on all the substances except for such gaseous sample can be controlled. During producing of the primary condensate, it is preferable to decrease thermal conductivity not to chill any part except for the atomizing electrode 104, for example, the container 101. In order to decrease the thermal conductivity, it is most preferable to reduce contact area between the atomizing electrode 104 and the container 101. Otherwise, any material having less coefficient of thermal conductivity may be sandwiched at the contact space between the atomizing electrode 104 and the container 101.

Then, during producing of the primary condensate, the primary condensate 204 comprising water 201, the chemical substance 202a and the chemical substance 202b are formed on the outer peripheral surface of the chilled atomizing electrode 104. Figure 8 (c) illustrates producing of the primary condensate.

During producing of the primary condensate, it is preferable to appropriately control temperature of the atomizing electrode 104 with the primary refrigerator 105 not to excess an amount of the primary condensate 204.

Then, during producing of the charged microparticles, numerous charged microparticles 205 are formed from the primary condensate 204. Figure 9 (a) illustrates producing of the charged microparticles. Such charged microparticles are most preferably microparticles consisting of several thousand of molecules, but they may be single through several hundred of clusters or be several ten thousand of liquid droplets. Two or more of those may be used simultaneously.

Charged microparticles 205 may also include ion or radical from chemical substances in addition to electrically neutral molecules. They may be used simultaneously. Charged microparticles 205 are preferably charged negatively, but they may be charged positively.

During producing of the charged microparticles, voltage of from 4kV or more to 6kV or less is preferably applied to between the atomizing electrode 104 and the opposite electrode 106.

Diameter of the charged microparticles 205 is not particularly limited according to the present invention, but it is restricted preferably to the range of from 2 nm or more to 30 mn or less in view of stability of the charged microparticles.

An electrical amount to be charged to the charged microparticles 205 is most preferably an amount equivalent to the electrical charge content (1.6 X 10⁻¹⁹ C) per the single microparticle, but such amount can be changed to that larger than the electrical charge content.

In the meantime, according to the embodiment of the present invention, the container 101 is sealed after production of the primary condensate. Thereby, the charged microparticles 205 would not flow away from the container 101.

Then, during applying of voltage, voltage is applied to the capture electrode 107 for the opposite electrode 106. Figure 9 (b) illustrates applying of the voltage. Charged microparticles 205 having the diameter of from about 2 nm to about 30 nm are essentially tend to be dispersed because they are repulsive to static electricity, but most of the charged microparticles 205 are easily concentrated at adjacent to the tip of the capture electrode 107 by providing the acicular capture electrode 107 and concentrating static electricity thereat. When the charged microparticles 205 are negatively charged, it is preferably to apply direct positive voltage to the capture electrode 107 for the opposite electrode 106. Application of the voltage is preferably continuously, but it may be applied pulsatively.

Then, during producing of the secondary condensate, the capture electrode 107 is chilled by the secondary refrigerator 108. Figure 9 (c) illustrates producing of the secondary condensate. By producing the secondary condensate after such application of voltage, charged microparticles 205 are concentrated at adjacent to the tip of the capture electrode 107 and can be chilled.

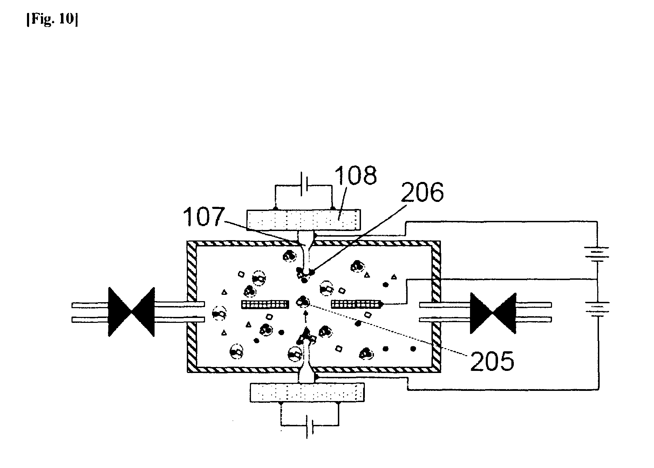

Then, during producing of the secondary condensate, most of the charged microparticles 205 are condensed at adjacent to the tip of the capture electrode 107, then the secondary condensates 206 are formed. Figure 10 illustrates producing of the secondary condensate. As a result of producing of the secondary condensate, it prevents the capture electrode 107 from spreading the secondary condensate 206 on the whole surface thereof.

In the meantime, since the gaseous sample 203 is electrically neutral, it may be directly changed into condensate without producing the charged microparticles at not only the tip of the acicular capture electrode 107 but also at the side surface thereof. But, according to the embodiment of the present invention, since the container 101 is sealed after the primary condensate has been produced, the gaseous sample 203 would not additionally be introduced thereinto. Accordingly, it would be difficult to form condensate directly from the gaseous sample 203 on the capture electrode 107 and to spread the same on the whole surface of the capture electrode 107.

Further, according to the embodiment of the present invention, the charged microparticles 205 would not flow away prom the container 101. At this time, since number of the charged microparticles 205 in the container 101 would be increased, the secondary condensate 206 is concentrated at the tip of the capture electrode 107. As a result thereof, the present invention prevents the capture electrode 107 from spreading condensate on the whole surface thereof.

### (Example 1)

Container 101 was made of transparent acrylic resin of 0.5 mm thickness. The container 101 was rectangular parallelepiped of 32 mm x 17 mm x 12 mm. Transparent container 101 is preferable, because process of forming condensate can be observed. Then, the container 101 can be made through monolithic molding.

Inlet 102 was made by forming a hole of 3 mm diameter at a part of the container 101 and connecting therewith silicone tube of 3 mm outer diameter. Inlet 102 can be made by any method known in the art. Namely, it can be made by any method including monolithic molding to be employed to form it together with the container 101, cutting operation, and the other conventional forming methods like dry etching, hot embossing and nanoimprint.

Outlet 103 was made by forming a hole of 3 mm diameter at the other part of the container 101 and connecting therewith silicone tube of 3 mm outer diameter. Outlet 103 can be made by any method known in the art. Namely, it can be made by any method including monolithic molding to be employed to form it together with the container 101, cutting operation, and the other conventional forming methods like dry etching, hot embossing and nanoimprint.

Stainless needle as the atomizing electrode 104 was mounted at inside of the container 101. Length of the stainless needle was 3 mm. Maximum diameter of the stainless needle was 0.79 mm, while the minimum diameter of which was 0.5 mm. Then the stainless needle had a ball having 0.72 mm diameter at the tip thereof to stably produce charged microparticles. Further, the ball has semispherical projection having 100µm diameter at the tip thereof. One edge of the atomizing electrode 104 was connected to a lead for voltage application. The atomizing electrode 104 was mounted on the bottom of the container 101. Tip of the atomizing electrode 104 was mounted to direct toward upwardly.

Thermoelectric element as the primary refrigerator 105 was mounted at adjacent to the atomizing electrode 104. Size of the thermoelectric element was 14 mm x 14 mm x 1 mm. The thermoelectric element had 0.9 W of maximum endothenn and 69 °C of maximum temperature difference. Surface to be chilled in the thermoelectric element was coated with ceramic. Since the surface of such ceramic has fine rough structure and porous structure, they can effectively chill any subject to be contacted therewith. Primary refrigerator 105 was connected to the atomizing electrode 104 with thermal conductive paste.

Opposite electrode 106 was mounted by making 3 mm space from tip of the atomizing electrode 104. As the opposite electrode 106, circular stainless plate having 12 mm outer diameter, 8 mm inner diameter and 0.47 mm thickness. One edge of the opposite electrode 106 was collected to a lead for voltage application.

Stainless needle as the capture electrode 107 was mounted at adjacent to the opposite electrode 106. Length of the stainless needle was 3 mm. Maximum diameter of the stainless needle was 0.79 mm, while the minimum diameter of which was 0.5 mm. Then the stainless needle had a ball having 0.72 mm diameter at the tip thereof. Further, the ball has semispherical projection having 100 µm diameter at the tip thereof. Tip of the capture electrode 107 was mounted to direct toward downwardly. One edge of the capture electrode 107 was connected to a lead for voltage application.

Thermoelectric element as the secondary refrigerator 108 was mounted at adjacent to the capture electrode 107. Size of the thermoelectric element was 14 mm x 14 mm x 1 mm. The thermoelectric element had 0.9 W of maximum endotherm and 69 °C of maximum temperature difference. Surface to be chilled in the thermoelectric element was coated with ceramic. Since the surface of such ceramic has fine rough structure and porous structure, they can effectively chill any subject to be contacted therewith. Secondary refrigerator 108 was connected to the capture electrode 107 with thermal conductive paste.

Operation procedures of the electrostatic atomizer are as follows.

During introducing of the gaseous sample, it was injected into the container 101 through the inlet 102. The container 101 according to this example has 6.5 ml of volume and the gaseous sample was injected thereinto in the flow rate of 500 ml/min.

According to this example, the gaseous sample was prepared by successively introducing dry nitrogen gas into water and 0.3% acetic acid solution and bubbling those.

During introducing of the gaseous sample, prior to injection of the gaseous sample into the container 101, the container 101 had been filled with dry nitrogen gas.

Then, during introducing of the gaseous sample, excessive gaseous sample had been exhausted through outlet 103.

Then, the atomizing electrode 104 was primarily chilled with a thermoelectric element. Temperature of the atomizing electrode 104 was 26 °C prior to the operation and was decreased to 15 °C in 30 seconds later. Temperature of the atomizing electrode 104 was determined with K-type thermocouple. Preferably, temperature of the atomizing electrode 104 is kept to the condensation point of water vapour or less.

Then, during producing of the primary condensate, the primary condensate 204 was going to be formed on the outer peripheral surface of the atomizing electrode 104 at 5 seconds later from commencement on operation of the thermoelectric element. Although diameter of liquid droplets is 10µm or less at the early stage of forming the primary condensate 204, they grown up accordingly and enough amounts thereof could be taken at 10 seconds later from commencement on operation of the thermoelectric element. Forming of the primary condensate 204 on the atomizing electrode 104 was observed with microscope (KEYENCE, VH-6300).

Next, in producing of the charged microparticles, the primary condensates 204 were converted into numerous charged microparticles 205. Charged microparticles 205 were produced with electrostatic atomization. As stated in the foregoing Embodiment 1, although corona discharge was generated at early stage of such electrostatic atomization, the present invention may include it in producing of the charged microparticles.

In view of stability on the charged microparticles 205, diameter of charged microparticles 205 should preferably be adjusted within from 2 nm or more to 30 nm or less. Charged microparticles 205 exist preferably individually, but they may be consisted of the combined plural microparticles.

During producing of charged microparticles, 5kV direct current (DC) was applied between the atomizing electrode 104 and the opposite electrode 106. At this case, the atomizing electrode 104 was used as a cathode, while the opposite electrode 106 was used as an anode. Although similar effect was confirmed when the atomizing electrode 104 was used as an anode and the opposite electrode 106 was used as a cathode, process for producing charged microparticles was relatively unstable.

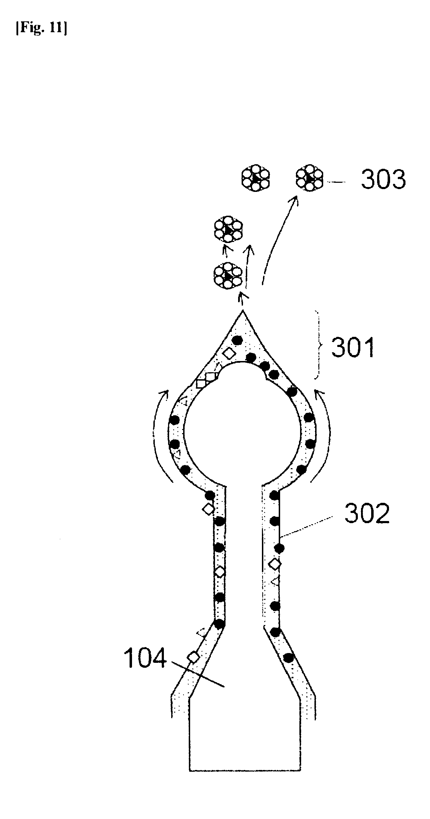

During producing of charged microparticles, a conical water column called as Taylor cone was formed at the tip of the atomizing electrode 104 and numerous charged microparticles containing chemical substances were released from the tip of such water column. Figure 11 is the schematic view illustrating a Taylor cone and a method for producing charged microparticles. Primary condensates 302 which forms Taylor cone 301 and were successively transferred to toward the tip of the atomizing electrode 104. Charged microparticles 303 were formed from tip of the tail cone 301 where electrical field are concentrated.

Then, during producing of charged microparticles, electric current flowed across between the atomizing electrode 104 and the opposite electrode 106 was determined. When excessive electric current was flowed therebetween, voltage to be applied to between the atomizing electrode 104 and the opposite electrode 106 was eliminated or was declined.

Further, during applying of voltage, 500V of direct current (DC) was applied to between the opposite electrode 106 and the capture electrode 107. By applying such voltage, charged microparticles 205 can be captured at adjacent to the tip of the capture electrode 107 with static electricity. According to this EXAMPLE, positive voltage was applied to the capture electrode 107 for the opposite electrode 106. Voltage to be applied to between the opposite electrode 106 and the capture electrode 107 should preferably be adjusted to from 0 V or more to 5kV or less, more preferably from 0 V or more to 500V or less. When the charged microparticles 205 are negatively charged, it is most preferable to apply positive voltage to the capture electrode 107.

Then, the capture electrode 107 was secondary chilled with the secondary refrigerator 108. Temperature of the capture electrode 107 was 26 °C prior to the operation and was decreased to 15 °C in 30 seconds later. Temperature of the capture electrode 107 was determined with K-type thermocouple. Preferably, temperature of the capture electrode 107 is kept to the condensation point of water vapour or less. By applying voltage to the capture electrode 107 and secondary chilling the same, almost charged microparticles 205 can be chilled at adjacent to the tip of the capture electrode 107.

During producing of the secondary condensate, secondary condensate 206 had been taken by condensing the charged microparticles 205 at adjacent to the capture electrode 107. Preferably, temperature of the capture electrode 107 should be changed appropriately according to an amount of the secondary condensate 206 so produced. In view of life expectancy on the charged microparticles 205, production of the secondary condensate should be initiated within at latest 10 minutes from commencement on production of the charged microparticles.

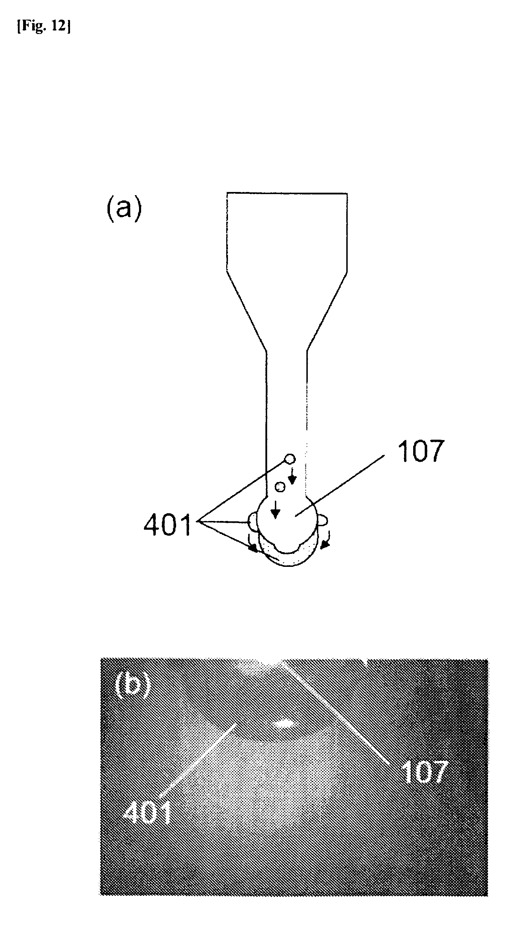

Figure 12(a) is the schematic view illustrating the capture electrode 107 at the step of preparing secondary condensate, while Figure 12(b) is a photograph on the tip of such electrode taken by light microscope. Obviously from Figures 12(a) and 12(b), the secondary condensate 401 can be captured at adjacent to the tip of the capture electrode 107. Spread of liquid droplet had been prevented, because the secondary condensate 401 charged static electricity. Further, since the tip of the capture electrode 107 was directed toward downwardly, spread of liquid droplet had also been prevented due to gravity applied to the secondary condensate 401.

After producing the secondary condensate, about 1µl of secondary condensate 206 was accumulated at adjacent to the tip of the capture electrode 107. Two minutes was necessary from the introduction of the gaseous sample to the production of the secondary condensate.

In order to confirm presence of acetic acid in the secondary condensate 206, the secondary condensate 206 was taken with a syringe and was subjected to gas chromatograph assay. The assay was performed with GC-4000 from GL. Science.

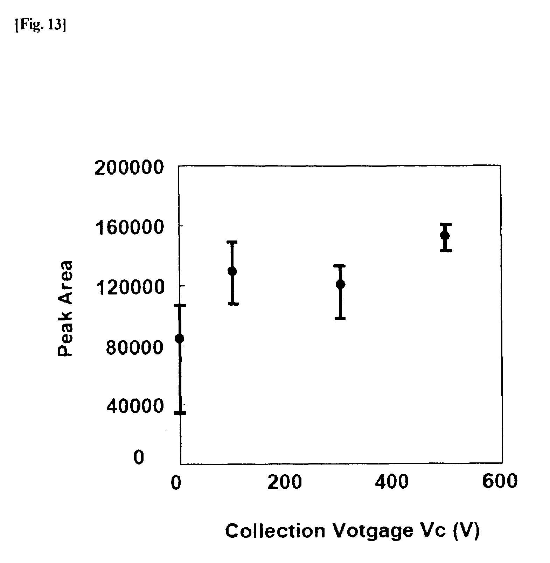

Figure 13 illustrates the assay result on the secondary condensate 206. Vertical axis is corresponding to peak area of gas chromotagram on acetic acid wherein the larger peak area indicates the higher acetic acid concentration in the secondary condensate 206. Horizontal axis is corresponding to voltage V_{c} to be applied to capture electrode 107 for the opposite electrode 106. Capture voltage V_{c} should be denoted as plus, when the opposite electrode is cathode and the capture electrode is anode.

Obviously from Figure 13, the secondary condensate 206 contained acetic acid. Acetic acid concentration in the secondary condensate 206 tended to be increased according to the larger capture voltage V_{c}, in particular, acetic acid concentration in the secondary condensate 206 was approximately double in comparison V_{c}=500V with V_{c}=0V. This indicated that the present invention offered the secondary effect of concentrating electrostatically atomized solution.

The result of Figure 13 indicated that it is effective to secondary chill the capture electrode 107 after voltage is applying to the same. Result of V_{c}=500V was obtained by applying voltage to the capture electrode 107 and secondary chilling the same. Result of V_{c}=0V was obtained by secondary chilling the capture electrode 107 and applying voltage to the same. Concentration of the secondary condensate 206 produced by applying voltage to the capture electrode 107 and secondary chilling the same was higher than that produced by secondary chilling the capture electrode 107 and applying voltage to the same. It is therefore preferable to secondary chill the capture electrode 107 after voltage is applying to the same.

Assay conditions were as follows. Capillary column was employed as assay column. Capillary column has inner diameter of 0.53 mm and length of 30 m. Helium was used as carrier gas. Temperature of an oven was set for 160 °C. Temperature of injection and of hydrogen flame ionization detector (FID) were respectively set for 250 °C.

After completing the assay, the capture electrode 107 was detached from the container 101 and was rinsed with methanol.

Then the capture electrode 107 was heated to remove the secondary condensate 206 on the capture electrode 107. Thermoelectric element was used to heat the capture electrode 107. The thermoelectric element used at this step is the same kind of element to chill the capture electrode 107 to produce the secondary condensate. Voltage polarity to be applied to the thermoelectric element to heat the capture electrode 107 is reverse to that to chill the capture electrode 107.

Further, in the production of charged microparticles and application of voltage, the capture electrode 107 was destaticized. Such destaticization was performed by grounding the capture electrode 107.

Then, from the introduction of the gaseous sample to the production of the secondary condensate, temperature of the opposite electrode 106 was kept to the condensation point of water vapour or more. Thereby, no condensate had been appeared on outer peripheral surface of the opposite electrode 106.

### (Example 2)

Description on system employed herein is intentionally omitted, because such system is identical to that of Example 1. Accordingly operation procedures of the electrostatic atomizer would only be described as follows.

During introducing of the gaseous sample, it was injected into the container 101 through the inlet 102. The container 101 according to this example has 6.5 ml of volume and the gaseous sample was injected thereinto in the flow rate of 500 ml/min.

According to this example, the gaseous sample was prepared by successively introducing dry nitrogen gas into water and 0.3% acetic acid solution and bubbling those.

During introducing of the gaseous sample, prior to injection of the gaseous sample into the container 101, the container 101 had been filled with dry nitrogen gas.

Then, during introducing of the gaseous sample, excessive gaseous sample had been exhausted through outlet 103.

Then, the atomizing electrode 104 was primarily chilled with a thermoelectric element. Temperature of the atomizing electrode 104 was 26°C prior to the operation and was decreased to 15 °C in 30 seconds later. Temperature of the atomizing electrode 104 was determined with K-type thermocouple. Preferably, temperature of the atomizing electrode 104 is kept to the condensation point of water vapour or less.

Then, during producing of the primary condensate, the primary condensate 204 was going to be formed on the outer peripheral surface of the atomizing electrode 104 at 5 seconds later from commencement on operation of the thermoelectric element. Although diameter of liquid droplets is 10µm or less at the early stage of forming the primary condensate 204, they grow up accordingly and enough amounts thereof could be taken at 10 seconds later from commencement on operation of the thermoelectric element. Forming of the primary condensate 204 on the atomizing electrode 104 was observed with microscope (KEYENCE, VH-6300).

Prior to producing the charged microparticles, the valves 109a and 109b equipped with the inlet 102 and the outlet 103 respectively were closed. Thereby, introducing of the gaseous sample 203 into the container 101 was terminated.

Next, in producing of the charged microparticles, the primary condensates 204 were converted into numerous charged microparticles 205. Charged microparticles 205 were produced with electrostatic atomization. As stated in the foregoing Embodiment 1, although corona discharge was generated at early stage of such electrostatic atomization, the present invention may include it in producing of the charged microparticles.

In view of stability on the charged microparticles 205, diameter of charged microparticles 205 should preferably be adjusted within from 2 nm or more to 30 run or less. Charged microparticles 205 exist preferably individually, but they may be consisted of the combined plural microparticles.

Then, during producing of charged microparticles, 5kV direct current (DC) was applied between the atomizing electrode 104 and the opposite electrode 106. At this case, the atomizing electrode 104 was used as a cathode, while the opposite electrode 106 was used as an anode.

During producing of charged microparticles, a conical water column called as Taylor cone was formed at the tip of the atomizing electrode 104 and numerous charged microparticles containing chemical substances were released from the tip of such water column.

Then, during producing of charged microparticles, electric current flowed across between the atomizing electrode 104 and the opposite electrode 106 was determined. When excessive electric current was flowed therebetween, voltage to be applied to between the atomizing electrode 104 and the opposite electrode 106 was eliminated or was declined.

Further, during applying of voltage, 500V of direct current (DC) was applied to between the opposite electrode 106 and the capture electrode 107. By applying such voltage, charged microparticles 205 can be captured at adjacent to the tip of the capture electrode 107 with static electricity. According to this EXAMPLE, positive voltage was applied to the capture electrode 107 for the opposite electrode 106. Voltage to be applied to between the opposite electrode 106 and the capture electrode 107 should preferably be adjusted to from 0 V or more to 5kV or less, more preferably from 0 V or more to 500V or less. When the charged microparticles 205 are negatively charged, it is most preferable to apply positive voltage to the capture electrode 107.

then, the capture electrode 107 was secondary chilled with the secondary refrigerator 108. Temperature of the capture electrode 107 was 26 °C prior to the operation and was decreased to 15 °C in 30 seconds later. Temperature of the capture electrode 107 was detennined with K-type thermocouple. Preferably, temperature of the capture electrode 107 is kept to the condensation point of water vapour or less.

During producing of the secondary condensate, secondary condensate 206 had been taken by condensing the charged microparticles 205 at adjacent to the capture electrode 107. Preferably, temperature of the capture electrode 107 should be changed appropriately according to an amount of the secondary condensate 206 so produced. In view of life expectancy on the charged microparticles 205, production of the secondary condensate should be initiated within at latest 10 minutes from commencement on production of the charged microparticles.

By producing the foregoing secondary condensate, approximately 1 µl of the secondary condensate could be accumulated at adjacent to the tip of the capture electrode 107.

### (Example 3)

Description on system employed herein is intentionally omitted, because such system is identical to that of Example 1. Accordingly operation procedures of the electrostatic atomizer would only be described as follows.

During introducing of the gaseous sample, it was injected into the container 101 through the inlet 102. The container 101 according to this example has 6.5 ml of volume and the gaseous sample was injected thereinto in the flow rate of 500 ml/min.

According to this example, the gaseous sample was prepared by successively introducing dry nitrogen gas into water and 0.3% acetic acid solution and bubbling those.

During introducing of the gaseous sample, prior to injection of the gaseous sample into the container 101, the container 101 had been filled with dry nitrogen gas.

Then, during introducing of the gaseous sample, excessive gaseous sample had been exhausted through outlet 103.

Prior to chilling primary, the valves 109a and 109b equipped with the inlet 102 and the outlet 103 respectively were closed. Thereby, introducing of the gaseous sample 203 into the container 101 was terminated.

Then, the atomizing electrode 104 was primarily chilled with a thermoelectric element. Temperature of the atomizing electrode 104 was 26 °C prior to the operation and was decreased to 15 °C in 30 seconds later. Temperature of the atomizing electrode 104 was determined with K-type thermocouple. Preferably temperature of the atomizing electrode 104 is kept to the condensation point of water vapour or less.

Then, during producing of the primary condensate, the primary condensate 204 was going to be formed on the outer peripheral surface of the atomizing electrode 104 at 5 seconds later from commencement on operation of the thermoelectric element. Although diameter of liquid droplets is 10 µm or less at the early stage of forming the primary condensate 204, they grown up accordingly and enough amounts thereof could be taken at 10 seconds later from commencement on operation of the thermoelectric element. Fonning of the primary condensate 204 on the atomizing electrode 104 was observed with microscope (KEYENCE, VH-6300).

Next, in producing of the charged microparticles, the primary condensates 204 were converted into numerous charged microparticles 205. Charged microparticles 205 were produced with electrostatic atomization. As stated in the foregoing Embodiment 1, although corona discharge was generated at early stage of such electrostatic atomization, the present invention may include it in producing of the charged microparticles.

In view of stability on the charged microparticles 205, diameter of charged microparticles 205 should preferably be adjusted within from 2 nm or more to 30 nm or less. Charged microparticles 205 exist preferably individually, but they may be consisted of the combined plural microparticles.

Then, during producing of charged microparticles, 5kV direct current (DC) was applied between the atomizing electrode 104 and the opposite electrode 106. At this case, the atomizing electrode 104 was used as a cathode, while the opposite electrode 106 was used as an anode.

During producing of charged microparticles, a conical water column called as Taylor cone was formed at the tip of the atomizing electrode 104 and numerous charged microparticles containing chemical substances were released from the tip of such water column.

Then, during producing of charged microparticles, electric current flowed across between the atomizing electrode 104 and the opposite electrode 106 was determined. When excessive electric current was flowed therebetween, voltage to be applied to between the atomizing electrode 104 and the opposite electrode 106 was eliminated or was declined.

Further, during applying of voltage, 500V of direct current (DC) was applied to between the opposite electrode 106 and the capture electrode 107. By applying such voltage, charged microparticles 205 can be captured at adjacent to the tip of the capture electrode 107 with static electricity. According to this EXAMPLE, positive voltage was applied to the capture electrode 107 for the opposite electrode 106. Voltage to be applied to between the opposite electrode 106 and the capture electrode 107 should preferably be adjusted to from 0 V or more to 5kV or less, more preferably from 0 V or more to 500V or less. When the charged microparticles 205 are negatively charged, it is most preferable to apply positive voltage to the capture electrode 107.

Then, the capture electrode 107 was secondary chilled with the secondary refrigerator 108. Temperature of the capture electrode 107 was 26 °C prior to the operation and was decreased to 15 °C in 30 seconds later. Temperature of the capture electrode 107 was determined with K-type thermocouple. Preferably, temperature of the capture electrode 107 is kept to the condensation point of water vapour or less.

During producing of the secondary condensate, secondary condensate 206 had been taken by condensing the charged microparticles 205 at adjacent to the capture electrode 107. Preferably, temperature of the capture electrode 107 should be changed appropriately according to an amount of the secondary condensate 206 so produced. In view of life expectancy on the charged microparticles 205, production of the secondary condensate should be initiated within at latest 10 minutes from commencement on production of the charged microparticles.

By producing the foregoing secondary condensate, approximately 1 µm of the secondary condensate could be accumulated at adjacent to the tip of the capture electrode 107.

It is obvious to one skilled in the art to predict many modifications and variations upon consideration of the disclosure herein. The foregoing disclosure should therefore be interpreted as illustration, and it was provided to teach to one skilled in the art the best embodiment of the present invention to realize the same. Substantial modification on detail of their structure and/or their function can be made without departing from the scope of the present invention.

### [Industrial Applicability]

Since a method for collecting gaseous sample according to the present invention can prevents the capture electrode from spreading solution electrostatically atomized thereon, it would be effectively applied to use wherein trance component in the gaseous sample has to be assayed. The method can be applied to a field of environment, chemical engineering, food processing and medicine in the form of, for example, a monitor for air pollution or water pollution and a biomarker assay device.

## Claims

1. A method for collecting gaseous sample with an electrostatic atomizer, wherein the electrostatic atomizer comprises:
a sealable container,
an inlet for gaseous sample mounted at a part of the container,
an outlet for gaseous sample mounted at the other part of the container,
an atomizing electrode mounted in the container,
a primary refrigerator to chill the atomizing electrode,
an opposite electrode mounted in the container and having a slit,
an acicular capture electrode opposed to the opposite electrode through the slit positioned therebetween, and
a secondary refrigerator to chill the capture electrode,
and the method comprises the steps of:
introducing the gaseous sample into the container through the inlet,
chilling the atomizing electrode with the primary refrigerator,
preparing a primary condensate from the gaseous sample on an outer peripheral surface of the atomizing electrode,
preparing charged microparticles from the primary condensate with electrostatic atomization,
applying voltage to the capture electrode for the opposite electrode,
chilling the capture electrode with the secondary refrigerator, and
preparing a secondary condensate from the charged microparticles at adjacent to the tip of the capture electrode.

2. The method according to Claim 1 wherein introduction of said gaseous sample is completed on or before initiation of preparing charged microparticles.

3. The method according to Claim 1 wherein the tip of said capture electrode is directed toward downwardly.

4. The method according to Claim 1 wherein said capture electrode is chilled with said secondary refrigerator to condensation point water vapour or less.

5. The method according to Claim 1 wherein said secondary refrigerator is a thermoelectric element.

6. The method according to Claim 5 wherein chilling surface of said secondary refrigerator is changed to heating surface by reversing polarity of direct voltage to be applied to said thermoelectric element.

7. The method according to Claim 1 wherein said secondary condensate is evaporated by heating said capture electrode.

8. The method according to Claim 1 wherein the temperature of said opposite electrode is kept at the condensation point of water vapour or more.

9. The method according to Claim 1 wherein said charged microparticles comprises water and components of said gaseous sample.

10. The method according to Claim 1 wherein components of said gaseous sample are volatile organic compounds.

11. The method according to Claim 10 wherein molecular weight of said volatile organic compounds is from 15 or more to 500 or less.

12. The method according to Claim 1 wherein said capture electrode possesses a mechanism to remove electrical charge with said charged microparticles.

13. The method according to Claim 1 wherein said capture electrode is able to connect to ground.

14. The method according to Claim 1 wherein tip of said capture electrode has a reservoir to receive said secondary condensate.

15. The method according to Claim 1 wherein tip of said capture electrode is equipped with a detector for chemical substances.

## Patentansprüche

1. Verfahren zum Auffangen einer gasförmigen Probe mit einem elektrostatischen Zerstäuber, wobei der elektrostatische Zerstäuber umfasst:
einen abdichtbaren Behälter,
einen Einlass für eine gasförmige Probe, der an einem Teil des Behälters angebracht ist,
einen Auslass für die gasförmige Probe, der an dem anderen Teil des Behälters angebracht ist,
eine Zerstäubungselektrode, die in dem Behälter angebracht ist,
einen Primär-Kühler zum Kühlen der Zerstäubungselektrode,
eine gegenüberliegende Elektrode, die in dem Behälter angebracht ist und einen Schlitz aufweist,
eine nadelförmige Einfangelektrode, die der gegenüberliegenden Elektrode über den dazwischen befindlichen Schlitz gegenüberliegt,
und
einen Sekundär-Kühler zum Kühlen der Einfangelektrode,
und wobei das Verfahren die folgenden Schritte umfasst:
Einleiten der gasförmigen Probe in den Behälter über den Einlass,
Kühlen der Zerstäubungselektrode mit dem Primär-Kühler,
Herstellen eines Primär-Kondensats aus der gasförmigen Probe an einer Außenumfangsfläche der Zerstäubungselektrode,
Herstellen geladener Mikroteilchen aus dem Primär-Kondensat mit elektrostatischer Zerstäubung,
Anlegen von Spannung an die Einfangelektrode für die gegenüberliegende Elektrode,
Kühlen der Einfangelektrode mit dem Sekundär-Kühler, und
Herstellen eines Sekundär-Kondensats aus den geladenen Mikroteilchen an die Spitze der Einfangelektrode angrenzend.

2. Verfahren nach Anspruch 1, wobei Einleiten der gasförmigen Probe bei oder vor dem Beginn des Herstellens geladener Mikroteilchen abgeschlossen ist.

3. Verfahren nach Anspruch 1, wobei die Spitze der Einfangelektrode nach unten gerichtet ist.

4. Verfahren nach Anspruch 1, wobei die Einfangelektrode mit dem Sekundär-Kühler auf den Kondensationspunkt von Wasserdampf oder darunter gekühlt wird.

5. Verfahren nach Anspruch 1, wobei der Sekundär-Kühler ein thermoelektrisches Element ist.

6. Verfahren nach Anspruch 5, wobei die Kühlfläche des Sekundär-Kühlers in eine Heizfläche umgewandelt wird, indem die Polarität von Gleichspannung umgekehrt wird, die an das thermoelektrische Element angelegt wird.

7. Verfahren nach Anspruch 1, wobei das Sekundär-Kondensat durch Erhitzen der Einfangelektrode verdampft wird.

8. Verfahren nach Anspruch 1, wobei die Temperatur der gegenüberliegenden Elektrode auf dem Kondensationspunkt von Wasserdampf oder darüber gehalten wird.

9. Verfahren nach Anspruch 1, wobei die geladenen Mikroteilchen Wasser und Bestandteile der gasförmigen Probe umfassen.

10. Verfahren nach Anspruch 1, wobei Bestandteile der gasförmigen Probe flüchtige organische Verbindungen sind.

11. Verfahren nach Anspruch 10, wobei das Molekulargewicht der flüchtigen organischen Verbindungen von 15 oder mehr bis 500 oder weniger reicht.

12. Verfahren nach Anspruch 1, wobei die Einfangelektrode einen Mechanismus zum Aufheben elektrischer Ladung mit den geladenen Mikroteilchen besitzt.

13. Verfahren nach Anspruch 1, wobei die Einfangelektrode mit Erde verbunden werden kann.

14. Verfahren nach Anspruch 1, wobei die Spitze der Einfangelektrode einen Sammelbehälter zum Aufnehmen des Sekundär-Kondensats aufweist.

15. Verfahren nach Anspruch 1, wobei die Spitze der Auffangelektrode mit einem Detektor für chemische Substanzen versehen ist.

## Revendications

1. Procédé de collecté d'un échantillon gazeux avec un atomiseur électrostatique, ledit atomiseur électrostatique comprenant :
un récipient scellable,
un orifice d'entrée pour l'échantillon gazeux, monté au niveau d'une partie du récipient,
un orifice de sortie pour l'échantillon gazeux, monté au niveau de l'autre partie du récipient,
une électrode d'atomisation montée dans le récipient,
un dispositif réfrigérant primaire pour refroidir l'électrode d'atomisation,
une électrode opposée montée dans le récipient et comportant une fente,
une électrode de capture aciculaire faisant face à l'électrode opposée, avec la
fente placée entre elles deux,
et
un dispositif réfrigérant secondaire pour refroidir l'électrode de capture,
et le procédé comprenant les étapes de :
introduction de l'échantillon gazeux dans le récipient par l'orifice d'entrée,
refroidissement de l'électrode d'atomisation avec le dispositif réfrigérant primaire,
préparation d'un condensat primaire à partir de l'échantillon gazeux sur une surface périphérique extérieure de l'électrode d'atomisation,
préparation de microparticules chargées, à partir du condensat primaire, par une atomisation électrostatique,
application d'une tension entre l'électrode de capture et l'électrode opposée,
refroidissement de l'électrode de capture avec le dispositif réfrigérant secondaire, et
préparation d'un condensat secondaire à partir des microparticules chargées, à proximité de la pointe de l'électrode de capture.

2. Procédé selon la revendication 1 dans lequel l'introduction dudit échantillon gazeux est terminée au moment de ou avant le démarrage de la préparation des microparticules chargées.

3. Procédé selon la revendication 1 dans lequel la pointe de ladite électrode de capture est dirigée vers le bas.

4. Procédé selon la revendication 1 dans lequel ladite électrode de capture est refroidie avec ledit dispositif réfrigérant secondaire au point de condensation de la vapeur d'eau ou à une température inférieure.

5. Procédé selon la revendication 1 dans lequel ledit dispositif réfrigérant secondaire est un élément thermoélectrique.

6. Procédé selon la revendication 5 dans lequel la surface de refroidissement dudit dispositif réfrigérant secondaire est modifiée en surface de chauffage par inversion de la polarité de la tension directe à appliquer sur ledit élément thermoélectrique.

7. Procédé selon la revendication 1 dans lequel ledit condensat secondaire est évaporé par chauffage de ladite électrode de capture.

8. Procédé selon la revendication 1 dans lequel la température de ladite électrode opposée est maintenue au point de condensation de la vapeur d'eau ou à une température supérieure.

9. Procédé selon la revendication 1 dans lequel lesdites microparticules chargées comprennent de l'eau et les constituants dudit échantillon gazeux.

10. Procédé selon la revendication 1 dans lequel les constituants dudit échantillon gazeux sont des composés organiques volatils.

11. Procédé selon la revendication 10 dans lequel la masse moléculaire desdits composés organiques volatils est comprise entre 15 et 500.

12. Procédé selon la revendication 1 dans lequel ladite électrode de capture possède un mécanisme pour éliminer la charge électrique avec lesdites microparticules chargées.

13. Procédé selon la revendication 1 dans lequel ladite électrode de capture est capable d'une liaison à la terre.

14. Procédé selon la revendication 1 dans lequel la pointe de ladite électrode de capture a un réservoir pour recevoir ledit condensat secondaire.

15. Procédé selon la revendication 1 dans lequel la pointe de ladite électrode de capture est équipée d'un détecteur de substances chimiques.
